# FASCICULE DE BREVET EUROPEEN

(11) **EP 2 365 937 B1**
(45) Date de publication et mention de la délivrance du brevet: **17.04.2013**
(21) Numéro de dépôt: 09768134.0
(22) Date de dépôt: 03.11.2009
(51) Int. Cl.: C01B 3/38

(54) **PROCÉDÉ D'ALLUMAGE DES BRÛLEURS DANS UN FOUR DE REFORMAGE**
VERFAHREN ZUM ZÜNDEN DER BRENNER IN EINEM REFORMIEROFEN
METHOD FOR LIGHTING THE BURNERS IN A REFORMING FURNACE

(30) Priorité: 13.11.2008 FR 0857678
(43) Date de publication de la demande: 21.09.2011
(73) Titulaire: L'Air Liquide Société Anonyme pour l'Etude et l'Exploitation des Procédés Georges Claude, 75007 Paris (FR)
(72) Inventeur: SUN, Lian-Ming, F-91140 Villebon-sur-Yvette (FR); COBBAUT, Jan, B-9470 Denderleeuw (BE); GALLARDA, Jean, F-94340 Joinville le Pont (FR)
(74) Mandataire: Mellul-Bendelac, Sylvie Lisette
(86) Numéro de dépôt international: PCT/FR2009/052122
(87) Numéro de publication internationale: WO 2010/055246

(56) Documents cités:
- FR-A1- 2 315 479
- US-A- 4 728 506
- "PRIMARY REFORMER PROBLEMS" NITROGEN AND METHANOL, BRITISH SULPHUR PUBLISHING, LONDON, GB, no. 250, 1 mars 2001 (2001-03-01), pages 30-32,34, XP001008931 ISSN: 1462-2378

## Description

La présente invention concerne un procédé d'allumage des brûleurs d'un four de reformage à la vapeur d'hydrocarbures.

Les procédés de reformage à la vapeur d'hydrocarbures, couramment dénommés SMR ("steam methane reforming" en anglais) produisent un mélange composé majoritairement d'H₂ et CO, qu'on appelle syngas ou gaz de synthèse. Ces procédés sont basés sur des réactions dites de reformage, lesquelles sont des réactions catalytiques fortement endothermiques à haute température (800-950°C). Dans ce but, les hydrocarbures ainsi que de la vapeur d'eau sont introduits dans des tubes de reformage remplis de catalyseur, lesdits tubes étant placés dans un four dit de reformage. En sortie des tubes, on obtient le gaz de synthèse.

Le four est composé d'une (ou plusieurs) chambre de combustion en murs réfractaires et de brûleurs placés sur ces murs. Les brûleurs sont disposés de manière à transférer la chaleur de leur combustion au mélange d'hydrocarbures et de vapeur à travers la paroi des tubes, généralement par rayonnement de la chaleur de la flamme sur les parois réfractaires de la chambre de combustion.

Les tubes de reformage utilisés dans ces procédés sont soumis à des conditions très sévères et ont des durées de vie limitées. Une exposition de ces tubes à des niveaux de température supérieurs à celui du design, même pendant un temps limité, même localement, peut être extrêmement préjudiciable à leur durée de vie.

Les risques de surchauffe sont particulièrement importants durant les phases transitoires, et notamment les phases de démarrage en raison de l'absence des réactions endothermiques à l'intérieur des tubes. En effet, durant la phase de démarrage, seul un petit débit de gaz inerte (azote, vapeur, etc.) circule dans les tubes et les chaleurs générées par les brûleurs sont essentiellement absorbées par les chaleurs sensibles des tubes et des catalyseurs ainsi que des parois du four

En outre, il faut aussi prendre en compte le fait que les mesures de température à l'intérieur d'un four ne sont pas nécessairement fiables lors de ces phases de démarrage. En effet, il n'existe pas en général de mesure directe de température de tubes, les seuls moyens disponibles sont les mesures de température réalisées à la sortie des fumées et à la sortie des tubes de reformage, au niveau d'un collecteur. Ces mesures ne donnent aucune indication sur les surchauffes éventuelles locales lors de ces phases transitoires.

Ainsi, le risque de surchauffe des tubes se double d'un problème de mesure de la température à l'intérieur des tubes lors de la phase de démarrage.

Les risques sont encore plus grands pour les fours SMR de type « side fired », c'est-à-dire à chauffage latéral, pour lesquels il peut exister des surchauffes locales à l'intérieur des tubes si les brûleurs allumés ne sont pas suffisamment et judicieusement répartis.

Pour ces fours SMR de type « side-fired », il est donc important de contrôler la puissance totale de chauffage qui doit être maintenue suffisamment faible et la distribution de chaleur qui doit être répartie sur les différentes rangées de brûleurs afin d'assurer une bonne uniformité de chauffage.

Or, le compromis entre ces deux besoins devient aujourd'hui d'autant plus difficile que les performances des brûleurs augmentant, on cherche en plus à minimiser le nombre de brûleurs et/ou de rangées de brûleurs.

Actuellement, lors des démarrages de four, les procédures d'allumage des brûleurs mises en oeuvre résultent souvent de pratiques courantes, souvent différentes selon les usines. Non optimisées, elles peuvent conduire à un chauffage fortement hétérogène des tubes de reformage, risquant ainsi de surchauffer, au moins localement certains d'entre eux.

US-A-4728506 divulgue un procédé de démarrage d'un four de reformage (top-fired). Pour démarrer ce four, on allume d'abord 3 brûleurs à l'intérieur et 2 à l'extérieur. Après une heure, des brûleurs additionnels peuvent être allumés. Pendant ce procédé de démarrage, la température du four est contrôlée.

La présente invention concerne ainsi tout particulièrement les fours de type side fired pour lesquels il peut exister de graves surchauffes locales de certains tubes si les brûleurs ne sont pas correctement répartis lors de l'allumage.

Lors des phases de démarrage, les équilibres thermiques ne sont pas atteints, la chaleur produite par les brûleurs allumés n'est pas consommée par les réactions puisque les réactifs ne circulent pas dans les tubes. Il y a donc à la fois à la fois un risque d'excès de chaleur apportée dans certaines zones du four, et s'y ajoutant, un risque de non consommation de chaleur. S'y ajoute de plus la difficulté d'effectuer les mesures de températures nécessaires à la protection des tubes.

Il existe donc un besoin pour un mode opératoire fiable de chauffage des tubes de reformage, lors de l'allumage des brûleurs du four, qui minimise le risque de surchauffe des tubes et améliore l'homogénéité du chauffage sur leur longueur.

Un but de la présente invention est de proposer un procédé d'allumage des brûleurs d'un four de reformage à chauffage latéral permettant de limiter le risque de surchauffe(s) locale(s) de tout ou partie de ces tubes.

Un autre but de la présente invention est de proposer un procédé d'allumage des brûleurs d'un four de reformage à chauffage latéral permettant un chauffage homogène de l'ensemble des tubes.

Ces différents buts sont atteints grâce à l'utilisation de séquences déterminées de démarrage de brûleurs qui définissent l'ordre dans le quel les différentes rangées horizontales de brûleurs seront allumées lors du démarrage d'un four de SMR.

Dans ce but, l'invention concerne un procédé d'allumage des brûleurs d'un four de reformage à la vapeur d'hydrocarbures lors de son démarrage, ledit four comprenant au moins:
- une chambre de combustion présentant au moins deux murs verticaux en matière réfractaire se faisant face,
- au moins des tubes de reformage alignés verticalement à mi-distance entre les deux murs verticaux en matière réfractaire se faisant face,
- des brûleurs disposés sur chacun des deux murs verticaux en matière réfractaire se faisant face, alignés verticalement sous forme de colonnes et horizontalement sous forme de n rangées Ri (avec i variant de 1 à n, et i croissant du bas vers le haut du four),
dans lequel on allume les brûleurs selon une séquence d'allumage constituée d'étapes successives, de sorte que, en fin d'allumage, l'ensemble des brûleurs nécessaires au reformage soit allumé,
caractérisé en ce que les brûleurs allumés lors d'une étape donnée appartiennent tous à une même rangée, et en ce que l'ordre des premières étapes de la séquence d'allumage est le suivant :
1 - allumage de brûleurs d'une rangée choisie parmi les rangées les plus élevées, puis
2 - allumage de brûleurs d'une rangée choisie parmi les plus basses, puis
3 - allumage de brûleurs d'une rangée choisie parmi les rangées de la zone médiane, de préférence dans la moitié haute, puis
4 - allumage de brûleurs d'une rangée choisie parmi les rangées de la moitié basse, l'ordre d'allumage des rangées étant choisi de sorte à améliorer l'homogénéité du chauffage dans l'ensemble du four.

Les performances de l'allumage des brûleurs du four selon l'invention sont encore améliorées lorsque, complétant la séquence jusqu'à allumage de l'ensemble des rangées de brûleurs, on équilibre, lors des étapes d'allumages suivantes, le chauffage sur l'ensemble de la hauteur du four, en assurant l'alternance bas/ milieu/ haut/ milieu...

Par étape d'allumage, on entend l'allumage successif de brûleurs selon un ordre déterminé.

Par séquence d'allumage, on entend une suite d'étapes d'allumage réalisées selon un ordre défini.

Lorsque l'invention précise que « l'ensemble des brûleurs allumés lors d'une étape se trouve dans une même rangée Ri », cela signifie que l'étape consiste en l'allumage d'un ensemble de brûleurs d'une rangée Ri donnée, mais cela ne signifie cependant pas que l'ensemble des brûleurs de ladite rangée doit être allumé.

Ainsi, par exemple il sera possible sur une rangée donnée de n'allumer qu'un brûleur sur 2, voire moins

Par ensemble des brûleurs nécessaires au reformage, on entend ensemble des brûleurs qui fonctionneront lors du reformage qui suivra le démarrage; il arrive en effet certaines opérations de reformage ne nécessitent pas d'utiliser la totalité de la puissance de chauffe du four ; dans ce cas, certains brûleurs ne sont pas allumés. Il est ainsi courant en particulier de ne pas utiliser la rangée de brûleurs supérieure ; dans ce cas, la rangée Ri d'indice « i » le plus élevé devant être allumée est Rn-1.

Selon un mode préféré de mise en oeuvre de l'invention, lors de la première étape d'allumage, au moins la rangée Ri correspondant au « i » le plus élevé est allumée.

De préférence, lorsque deux rangées sont allumées successivement, elles sont choisies non adjacentes parmi les rangées non encore allumées.

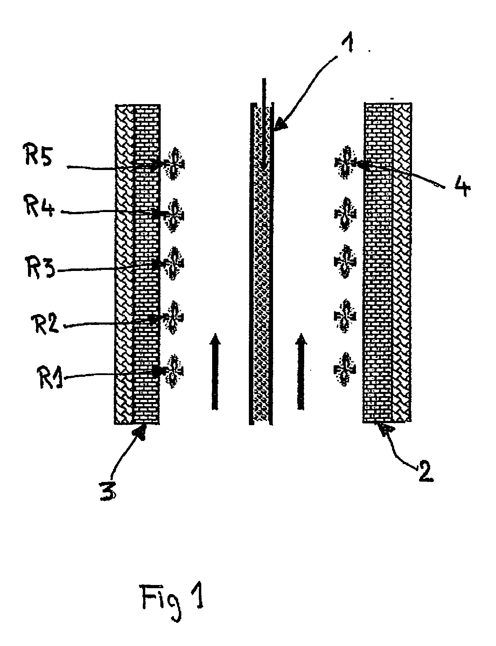

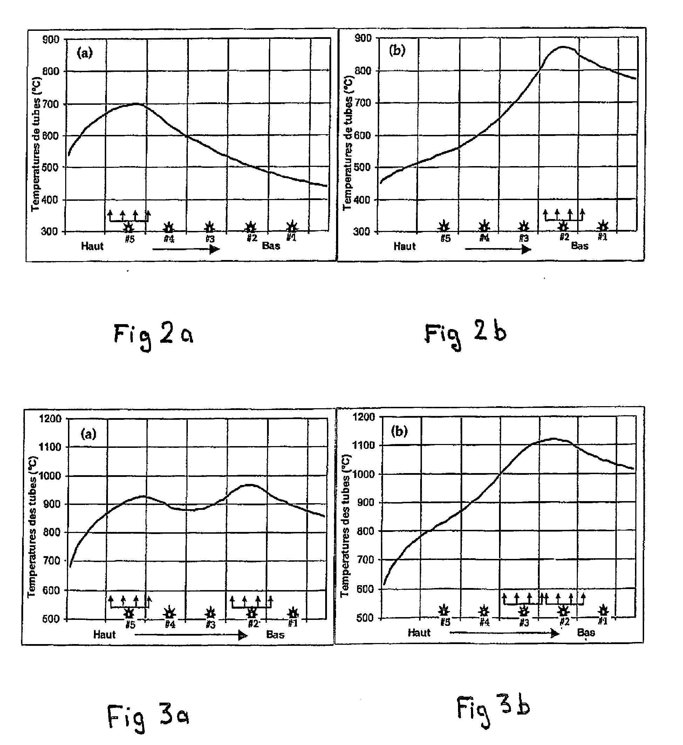

Les figures 1 à 3 illustrent l'invention dans le cas particulier d'un four de reformage de type « side fired» avec cinq rangées de brûleurs placés de manière symétrique des deux côtés du four. La figure 1 représente un four de reformage, les figures 2 et 3 montrent les profils de température des tubes de reformage (et des fumées) après un certain temps de chauffage avec des brûleurs allumés sur une seule rangée (fig 2a selon l'invention et 2b selon les pratiques habituelles de l'homme du métier) puis sur deux rangées (fig 3a selon l'invention et 3b selon les pratiques habituelles).

La figure 1 représente un four de reformage à chauffage latéral comprenant des tubes de reformage 1 placés à mi-distance entre deux murs en réfractaire 2 et 3. Les murs en réfractaire 2 et 3 sont équipés de brûleurs 4 disposés sous forme de colonnes et rangées. Les rangées de brûleurs sont référencées R1 à R5 du bas vers le haut.

Les pratiques de démarrage de l'état de l'art préconisent d'allumer les brûleurs un sur deux sur chaque rangée, en commençant par les rangées situées en bas du four (R2 voire R1), puis en poursuivant par d'autres rangées. Ce choix est notamment dicté par la facilité de mise en oeuvre; il est plus aisé d'allumer les rangées dans l'ordre, en commençant par le bas du four.

Certaines pratiques de démarrage préconisent également un allumage des brûleurs sur deux rangées adjacentes en haut du four (R4, R5) lors d'un démarrage à chaud.

Plusieurs types de problèmes sont potentiellement générés par l'allumage de brûleurs sur les rangées inférieures (R1 ou R2), soient notamment:
- surchauffe locale,
- chauffage hétérogène à l'intérieur du four,
- durée de la phase de démarrage trop importante, du fait d'un chauffage trop lent de la zone de convection.

Les figures 2a et 2b montrent les profils de température des tubes de reformage (et des fumées) mesurés après un temps de chauffage donné (identique dans les deux cas) avec des brûleurs allumés sur une seule rangée (fig 2a selon l'invention et 2b selon la pratique habituelle)

La comparaison des figures 2a et 2b montre que l'allumage de la rangée de brûleurs située en haut du four (R5) aboutit à des températures de tubes plus homogènes (fig 2a) que celui des brûleurs de la rangée R2 (deuxième à partir du bas du four). Par ailleurs, l'allumage des brûleurs de la rangée la plus haute conduit également à une température de fumées en sortie de four plus importante qui permet de chauffer plus rapidement la zone de convection, et de générer plus rapidement de la vapeur nécessaire au démarrage du SMR.

Lorsque l'on allume ensuite une deuxième rangées de brûleurs, la séquence d'allumage consistant à allumer des brûleurs sur la rangée R5 puis ensuite sur la rangée R2 conduit, ainsi que le montre la figure 3a, à une bonne homogénéité des températures sur l'ensemble de la longueur des tubes et limite les niveaux de températures atteints les plus élevés ; par contre, l'allumage de brûleurs sur deux rangées adjacentes, en particulier lorsque les rangées sont situées en partie basse du four conduit à une température de tubes maximale excessive et localisée au niveau des rangées considérées, comme le montre la figure 3b.

Dans le tableau suivant, sont comparées les températures maximales des tubes de reformage atteintes après un certain temps de chauffage avec la séquence R5-R2 de la figure 3-a, ainsi que différentes séquences d'allumage des rangées de brûleurs dont la séquence R2-R3 de la figure 3-b.

**Tableau 1**

| Rangées de brûleurs allumés | Températures de tubes maximales |
|---|---|
| R5-R2 | Base |
| R4-R5 | +53°C |
| R2-R4 | +66°C |
| R3-R4 | +84°C |
| R2-R3 | +154°C |

On constate que l'avantage de la nouvelle séquence selon l'invention est clairement mis en évidence, le risque de surchauffe y est minimum.

Par contre, l'allumage d'une rangée basse, suivi de la rangée adjacente, selon la pratique courante de l'homme du métier se révèle être la plus défavorable, tant en terme de surchauffe localisée des tubes et donc de risque de détérioration accélérée de ceux-ci, qu'en terme d'homogénéité de chauffage de l'ensemble du four.

Les performances de l'allumage des brûleurs du four selon l'invention sont encore améliorées lorsque, complétant la séquence jusqu'à allumage de l'ensemble des rangées de brûleurs, on équilibre, lors des étapes d'allumages suivantes, le chauffage sur l'ensemble de la hauteur du four.

Ainsi, pour un four SMR de type side fired, conforme à la figure 1, c'est à dire comportant 5 rangées de brûleurs, les nouvelles séquences d'allumages suivantes sont recommandées :
- allumage des brûleurs sur différentes rangées, selon les séquences suivantes : R5→R1→R3→R2→R4 ou R5→R2→R3→R1→R4.
- Il pourra par ailleurs être utile de limiter la puissance de chauffage avec un allumage de brûleurs limité par rangée, pouvant aller jusqu'à un sur trois, voire un sur quatre si c'est nécessaire.

On privilégie donc un démarrage de l'allumage par le haut du four, suivi d'une alternance bas/ milieu/ haut ; on évite aussi de préférence, l'allumage de rangées adjacentes (on admettra cependant que lorsque le nombre de rangées est petit, cette contrainte peut ne pas être respectée).

L'invention permet ainsi de :
- répartir et homogénéiser les puissances de chauffe à l'intérieur d'un four,
- limiter les surchauffes locales,
- raccourcir la durée des démarrages en produisant plus rapidement de la vapeur dans la chambre de convection, ainsi qu'en chauffant plus rapidement les tubes grâce à la bonne homogénéité des températures de tube obtenues.

L'invention est applicable à l'amélioration du fonctionnement de fours de reformage existants.

## Revendications

1. Procédé d'allumage des brûleurs d'un four de reformage à la vapeur d'hydrocarbures lors de son démarrage, ledit four comprenant :
- une chambre de combustion présentant au moins deux murs (2,3) verticaux en matière réfractaire se faisant face,
- au moins des tubes de reformage (1) alignés verticalement à mi-distance entre les deux murs verticaux en matière réfractaire se faisant face,
- des brûleurs disposés sur chacun des deux murs (2,3) verticaux en matière réfractaire se faisant face, alignés verticalement sous forme de colonnes et horizontalement sous forme de n rangées Ri (avec i variant de 1 à n, et i croissant du bas vers le haut du four),
dans lequel on allume les brûleurs selon une séquence d'allumage constituée d'étapes successives, de sorte que, en fin d'allumage, l'ensemble des brûleurs nécessaires au reformage soit allumé,
**caractérisé en ce que** les brûleurs allumés lors d'une étape donnée appartiennent tous à une même rangée, et **en ce que** l'ordre des premières étapes de la séquence d'allumage est le suivant :
1 - allumage de brûleurs d'une rangée choisie parmi les rangées les plus élevées, puis
2 - allumage de brûleurs d'une rangée choisie parmi les plus basses, puis
3 - allumage de brûleurs d'une rangée choisie parmi les rangées de la zone médiane, de préférence dans la moitié haute, puis
4 - allumage de brûleurs d'une rangée choisie parmi les rangées de la moitié basse, l'ordre d'allumage des rangées étant choisi de sorte à améliorer l'homogénéité du chauffage dans l'ensemble du four.

2. Procédé selon la revendication 1, **caractérisé en ce que** lors de la première étape d'allumage, au moins la rangée Ri correspondant au « i » le plus élevé est allumée.

3. Procédé selon l'une des revendications 1 ou 2, **caractérisé en ce que** lorsque deux rangées sont allumées successivement, elles sont choisies non adjacentes parmi les rangées non encore allumées.

## Claims

1. Method for igniting the burners of a hydrocarbon steam reforming furnace at the startup thereof, said furnace comprising:
- a combustion chamber having at least two mutually opposed vertical walls (2, 3) made of refractory material;
- at least vertically aligned reforming tubes (1) at mid-distance between the two mutually opposed vertical walls made of refractory material; and
- burners placed on each of the two mutually opposed vertical walls (2, 3) made of refractory material, said burners being aligned vertically in the form of columns and horizontally in the form of n rows Ri (where i varies from 1 to n and i increases from the bottom of the furnace towards the top),
in which the burners are ignited according to an ignition sequence consisting of successive steps such that, at the end of ignition, all of the burners necessary for the reforming are ignited,
**characterised in that** the burners ignited during a given step all belong to one particular row, and **in that** the order of the first steps of the ignition sequence is the following:
1 - igniting burners of a row chosen from the highest rows; then
2 - igniting burners of a row chosen from the lowest rows; then
3 - igniting burners of a row chosen from the rows of the central zone, preferably in the upper half; then
4 - igniting burners of a row chosen from the rows of the lower half, the order of ignition of the rows being chosen so as to improve the uniformity of the heating throughout the furnace.

2. Method according to claim 1, **characterised in that** at least the row Ri corresponding to the highest "i" is ignited during the first ignition step.

3. Method according to either claim 1 or claim 2, **characterised in that**, when two rows are ignited in succession, they are chosen so as to be non-adjacent from the rows not yet ignited.

## Patentansprüche

1. Verfahren zum Zünden der Brenner eines Ofens zur Reformierung von Kohlenwasserstoffdampf bei dessen Start, wobei der Ofen Folgendes umfasst:
- eine Brennkammer, die mindestens zwei vertikale, einander zugewandte Mauern (2, 3) aus feuerbeständigem Material aufweist,
- mindestens Reformierungsrohre (1), die in vertikaler Richtung mittig zwischen den zwei vertikalen, einander zugewandten Mauern ausgerichtet sind,
- Brenner, die an jeder der zwei vertikalen, einander zugewandten Mauern (2, 3) aus feuerbeständigem Material angeordnet sind, die in vertikaler Richtung in Form von Kolonnen und in horizontaler Richtung in Form von n Reihen Ri ausgerichtet sind (wobei i von 1 bis n variiert und i von dem unteren Teil zu dem oberen Teil des Ofens hin zunimmt),
bei dem die Brenner gemäß einer Zündsequenz gezündet werden, die aus aufeinander folgenden Schritten besteht, so dass, am Ende des Zündens, sämtliche für die Reformierung notwendigen Brenner gezündet wurden, **dadurch gekennzeichnet, dass** die gezündeten Brenner bei einem bestimmten Schritt alle ein und derselben Reihe zugehören und dass die Reihenfolge der ersten Schritte der Zündsequenz folgendermaßen ist:
1. Zünden von Brennern einer Reihe, die unter den höchsten Reihen gewählt ist,
anschließend
2. Zünden von Brennern einer Reihe, die unter den niedrigsten Reihen gewählt ist,
3. Zünden von Brennern einer Reihe, die unter den Reihen der mittleren Zone, vorzugsweise in der oberen Hälfte, gewählt ist, und anschließend
4. Zünden von Brennern einer Reihe, die unter den Reihen der unteren Hälfte gewählt ist, wobei die Reihenfolge des Zündens der Reihen so gewählt ist, dass die Homogenität der Aufheizung in dem gesamten Ofen verbessert wird.

2. Verfahren nach Anspruch 1, **dadurch gekennzeichnet, dass** beim ersten Zündschritt zumindest die Reihe Ri gezündet wird, die dem höchsten "i" entspricht.

3. Verfahren nach einem der Ansprüche 1 oder 2, **dadurch gekennzeichnet, dass**, wenn zwei Reihen nacheinander gezündet werden, sie unter den noch nicht gezündeten Reihen gewählt sind, die nicht aneinander stoßen.
